# EUROPEAN PATENT APPLICATION

(11) **EP 4 366 090 A1**
(43) Date of publication of application: **08.05.2024**
(21) Application number: 23206327.1
(22) Date of filing: 27.10.2023
(51) Int. Cl.: H01R 4/10, F16B 19/00, H01R 4/62, H01R 43/04, H01R 13/03, H01R 43/16

(54) **CONNECTION ASSEMBLY AND METHOD FOR PRODUCING A CONNECTION ASSEMBLY**

(30) Priority: 02.11.2022 DE 102022128989
(71) Applicant: TE Connectivity Germany GmbH, 64625 Bensheim (DE)
(72) Inventor: EHEIM, Manuel, 64625 Bensheim (DE); DISTLER, Patrick, 64625 Bensheim (DE); HOFFMANN, Bjoern, 64625 Bensheim (DE); BUCHHOLZ, Ron, 64625 Bensheim (DE); WOLF, Marcus, 64625 Bensheim (DE)
(74) Representative: Grünecker Patent- und Rechtsanwälte PartG mbB

(57) **Abstract**

The present invention relates to a connection assembly comprising a busbar 1 made of a first metallic material, where busbar 1 comprises a hole; a contact element 2 which is arranged in the hole in busbar 1 and is made of a second metallic material; where the outer diameter of the part of contact element 2, which in a direction of insertion is at the rear, is larger than the outer diameter of the part of contact element 2 which in the direction of insertion is at the fore; where the inner surface of the hole in busbar 1 comprises a recess 5 which is filled with the material of contact element 2, whereby contact element 2 is held in the hole in busbar 1.

## Description

The present invention relates to a connection assembly with an undercut and a retaining function. The present invention further relates to a method for connecting a busbar to a contact element to produce such a connection assembly.

A contact member, such as a contact ring or a contact pin, must have different material properties and therefore consists, for example, of a copper part and an aluminum part. Known methods for connecting two or more layers of material utilize local cold forming using a special punch and a die. The punch presses the layers of material into the die cavity where the pressure exerted by the punch forces the metal to flow sideways.

The outcome of the method is a button-shaped extrusion on the die side of the connection assembly which acts as a locking connection and a small cylindrical cavity on the punch side. An undercut (also referred to as a back taper) is created that produces a connection between the first and the second metal material.

However, such methods require a complex setup with a special punch and a die. Therefore, there is a need to create a permanent and electrically conductive connection between copper and aluminum using a simple tool.

This task is solved by the object of the independent claims. Advantageous embodiments are the object of the dependent claims.

The present invention is based on the idea of producing a stable and electrically conductive connection between a cylindrical contact element and a busbar by inserting the cylindrical contact element into a hole in the busbar and using a tool to locally press the wall of the contact element against the wall of the hole in the busbar. Alternatively, a locking element that remains in the contact can also be used. This creates a material shift in the wall of the hole in the busbar into which material of the cylindrical contact element is pressed so that an undercut (also referred to as a back taper) arises which permanently holds the cylindrical contact element in the hole in the busbar.

The present invention relates to a connection assembly comprising a busbar made of a first metallic material, where the busbar comprises a hole. The connection assembly further comprises a contact element which is arranged in the hole in the busbar and is made of a second metallic material. During the production of the connection assembly, the contact element is inserted into the hole in the busbar from one side of the busbar. The outer diameter of the part of the contact element, which in the direction of insertion is at the rear, is larger than the outer diameter of the part of the contact element which in the direction of insertion is at the fore. During assembly, this has the advantage that the contact element can move out of the hole in the busbar in a direction opposite to the direction of insertion, but cannot move further thereinto.

In addition, the inner surface of the hole in the busbar comprises a recess which is filled with the material of the contact element, whereby the contact element is held in the hole of the busbar. The advantage of the present invention is to provide a permanent and electrically conductive connection between copper and aluminum.

In an example of the connection assembly according to the invention, the first metallic material comprises aluminum.

In a further example of the connection assembly according to the invention, the second metallic material comprises copper.

In a further example of the connection assembly according to the invention, the contact element is tubular.

In a further example of the connection assembly according to the invention, the contact element comprises a ring pin.

In a further example of the connection assembly according to the invention, the parts of the connection assembly are silver-plated at least in part. This has the advantage that good electrical conductivity between parts of the connection assembly is ensured.

A further aspect of the present invention relates to a method for producing a connection assembly according to the invention, the method comprising the following steps of: producing a hole in the busbar, for example, by punching or by drilling. This has the advantage of the hole having a simple configuration. Producing a contact element that can be inserted into the hole in the busbar, where the outer diameter of the part of the contact element, which in a direction of insertion is at the rear, is larger than the outer diameter of the part of the contact element which in the direction of insertion is at the fore; inserting the contact element into the busbar; inserting into the contact element a removable tool comprising a projection on its outer surface, where the projection presses the wall of the contact element against the inner surface of the hole in the bus bar so that the wall of the contact element is deformed in a radial direction towards the inner surface of the hole in the bus bar, whereby a recess is formed in the inner surface of the hole in the busbar and is filled with the material of the contact element which is pressed against the inner surface of the hole in the busbar. This results in automatic undercutting. As an alternative to the removable tool, a locking element that remains in the component, such as a bushing, can be used.

The wall of the cylindrical contact element and the wall of the hole in the busbar need not necessarily comprise a projection at the beginning of the producing process. Rather, a projection is created in the wall of the contact element during the producing process due to the pressure in the radial direction and in turn exerts pressure in the radial direction onto the wall of the hole in the busbar and leads to a corresponding recess in the wall of the hole in the busbar. Since the recess in the wall of the hole in the busbar is created by the material of the contact element expanding in the radial direction, the former is filled directly by the expanding material of the contact element. This creates a projection in the wall of the contact element that protrudes in the radial direction and engages in the wall of the hole in the busbar. Since the radial direction is substantially orthogonal to the direction of insertion of the contact element into the hole in the busbar, the projection in the wall of the contact element forms an undercut which holds the contact element in the hole in the busbar.

An advantage of the method according to the invention is therefore the automatic undercutting which enables a permanent and electrically conductive connection between copper and aluminum in a simple and inexpensive method.

In one example of the method according to the invention, the hole in the busbar is produced by punching. This has the advantage that producing the hole is particularly simple and inexpensive.

In a further example of the method according to the invention, the hole in the busbar is produced by drilling. This has the advantage that producing the hole is particularly simple and inexpensive.

In a further example of the method according to the invention, the hole in the busbar is cylindrical. This has the advantage that the simple geometry of the hole in the busbar makes producing the hole particularly simple and inexpensive.

In a further example of the method according to the invention, the cylindrical hole in the busbar is in particular straight. This has the advantage that the simple geometry of the hole in the busbar makes producing the hole particularly simple and inexpensive.

In a further example of the method according to the invention, the contact element is tubular. This has the advantage that the contact element can be easily inserted into the hole in the busbar.

In a further example of the method according to the invention, the contact element is produced by cold forming. Cold forming describes the plastic forming of metals below the recrystallization temperature. In the case of aluminum and copper, cold forming, unlike hot forming, does not require heating the material to the recrystallization temperature. This has the advantage that producing the contact element is particularly simple and inexpensive.

For a better understanding of the present invention, it shall be explained in more detail with reference to the embodiments shown in the following figures. Same parts are provided with the same reference numbers and the same component names. Furthermore, some features or combinations of features from the different embodiments shown and described can in themselves represent solutions that are independent, inventive, or according to the invention, where
- **Fig. 1**: shows a schematic sectional view of a connection assembly according to a first exemplary embodiment of the present invention;
- **Fig. 2**: shows a cross section through the connection assembly from Figure 1;
- **Fig. 3**: shows a schematic sectional view of a connection assembly according to a further embodiment of the present invention;
- **Fig. 4**: shows a schematic sectional view of a connection assembly according to a further embodiment of the present invention.

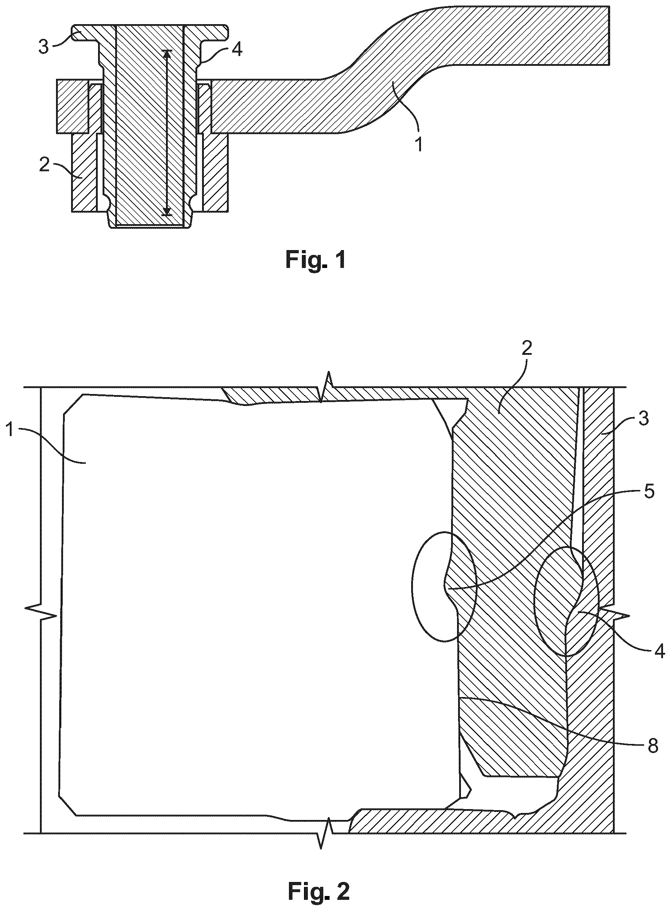

Figure 1 shows a schematic sectional view of a connection assembly 7 according to a first exemplary embodiment of the present invention. The connection assembly comprises a busbar 1 made of a first metallic material, for example, aluminum. Busbar 1 comprises a hole in which contact element 2 is arranged. Contact element 2 is made of a second metallic material, for example, copper, and has a tubular shape. In Figure 1, contact element 2 is inserted into the bore from below. The outer diameter of the part of contact element 2, which in the direction of insertion is at the rear, is larger than the outer diameter of the part of contact element 2 which in the direction of insertion is at the fore, so that contact element 2 inserted into the hole in busbar 1 can move out of the hole in busbar 1, but not further thereinto.

A tool 3 is inserted into tubular contact element 2 in the direction opposite to the direction of insertion of the contact element. Tool 3 comprises a projection 4 on its outer surface. This could be, for example, a type of knurled structure or a difference in diameter. When tool 3 is inserted into tubular contact element 2, projection 4 presses the wall of contact element 2 against inner surface 8 of the hole in busbar 1. The pressure causes the wall of contact element 2 to be deformed in the radial direction towards the inner surface of the hole in busbar 1. As a result, a recess 5 is formed in the inner surface of the hole in busbar 1. This recess 5 is filled with the material of contact element 2 which is pressed against the inner surface of the hole in busbar 1. As an alternative to removable tool 3, a locking element that remains in the component, such as a bushing, can be used.

Figure 2 shows a cross section through connection assembly 7, consisting of busbar 1, contact element 2, and tool 3 with projection 4. In Figure 2, tool 3 is inserted entirely into tubular contact element 2 and a recess 5 is formed in inner surface 8 of the hole in busbar 1 and filled with the material of contact element 2. Recess 5 filled with the material of contact element 2 forms an undercut (also referred to as a back taper) which creates a permanent and electrically conductive connection between the first and the second metal material.

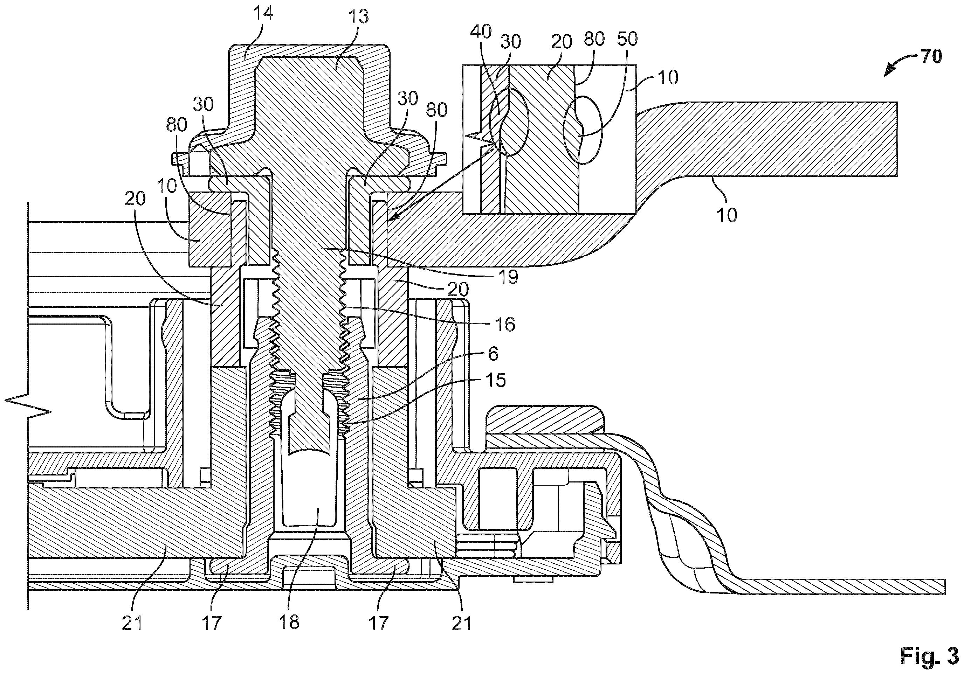

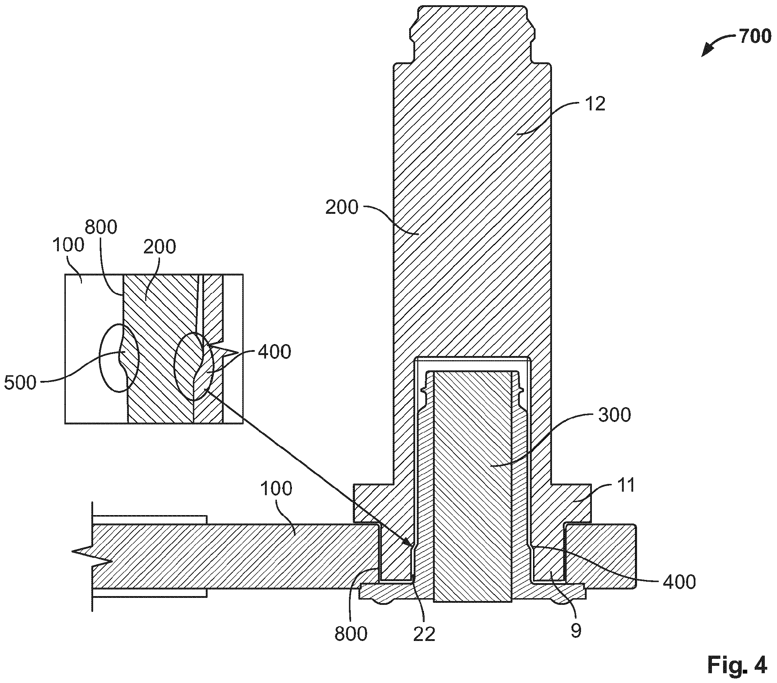

Figures 3 and 4 show alternative embodiments of the present invention. Figure 3 shows a schematic sectional view of a connection assembly 70 according to a further exemplary embodiment of the present invention. Connection assembly 70 comprises a busbar 10, a contact element 20, and a tool 30 with a projection 40. In Figure 3, tool 30 is inserted entirely into tubular contact element 20. The enlarged detail from Figure 3 shows that a recess 50 is formed in inner surface 80 of the hole in busbar 10 and is filled with the material of contact element 20. Recess 50 filled with the material of contact element 20 forms an undercut which creates a permanent and electrically conductive connection between the first and the second metal material.

In the embodiment shown in Figure 3, a threaded bushing 6 and a screw as a mating member 19 are used to create the undercut. Screw 19 comprises an external thread 16 which can be screwed into the internal thread 15 of threaded bushing 6. For this purpose, screw 19 is inserted into the cavity of tool 30. Screw 19 has a screw head 13 which is wider than the shank of screw 19. This prevents screw 19 from slipping through tool 30. Accordingly, threaded bushing 6 is inserted into a cavity of a contact ring 21. Threaded bushing 6 has a widening 17 at the end that is disposed opposite internal thread 15. This prevents threaded bushing 6 from slipping through contact ring 21.

If screw 19 is screwed into threaded bushing 6, the elements of connection assembly 70, which are arranged between the widening on screw head 13 and widening 17 on threaded bushing 6, are pressed together. In particular, tool 30 is pressed into contact element 20 as a result. Projection 40 on tool 30 thereby presses the material of contact element 20 in the radial direction against inner surface 80 of the hole in busbar 10 so that a recess 50 is created in inner surface 80 of the hole in busbar 10 and is filled with the pressed material of the contact element. Recess 50 filled with the material of contact element 20 therefore forms an undercut which creates a permanent and electrically conductive connection between the first and the second metal material.

Figure 4 shows a schematic sectional view of a connection assembly 700 according to a further exemplary embodiment of the present invention. Like connection assembly 7 shown in Figure 1, connection assembly 700 shown in Figure 4 comprises a busbar 100 made of a first metallic material, for example, aluminum. Busbar 100 comprises a hole in which contact element 200 is arranged. Contact element 200 is made of a second metallic material, for example, copper. Contact element 200 has the shape of a cylinder that is hollow at least in part. The cylinder comprises at a base surface an opening 22 which is connected to the cavity in the cylinder, i.e. the cylinder is tubular on one side.

On the side opposite the tubular side, the cylinder comprises a PIN 12 with which an electrically conductive connection, such as a plug connection, can be established to a further contact element (not shown in Figure 4).

In Figure 4, a part of contact element 200, namely connecting element 9, is inserted from above into the bore in busbar 100. Contact element 200 has a first exterior diameter that is so much smaller than the interior diameter of the hole in busbar 100 that contact element 200 can be inserted into the hole in busbar 100. Adjacent to connecting element 9, contact element 200 comprises a stop element 11. The latter has a second exterior diameter which exceeds the interior diameter of the hole in busbar 100 to such an extent that stop element 11 cannot be inserted into the hole in busbar 100. Stop element 11 therefore ensures that contact element 200 can only be inserted that distance into the hole in busbar 100 that connecting element 9 is long. When connecting element 9 is inserted entirely into the hole in busbar 100, contact element 200 can no longer be inserted further into the hole in busbar 100, but can only be led out of the hole in busbar 100 in the direction opposite to the direction of insertion.

When producing connection assembly 700, a tool 300 is inserted into the tubular part of contact element 200 in the direction opposite to the direction of insertion of contact element 200. As can be seen in the enlarged detail from Figure 4, tool 300 comprises a projection 400 on its outer surface. When tool 300 is inserted into the tubular part of contact element 200, projection 400 presses the wall of contact element 200 against inner surface 800 of the hole in busbar 100. The pressure causes the wall of contact element 200 to be deformed in the radial direction towards inner surface 800 of the hole in busbar 100. As a result, a recess 500 is formed in inner surface 800 of the hole in busbar 100. This recess 500 is filled with the material of contact element 200 which is pressed against the inner surface of the hole in busbar 100.

Recess 500 filled with the material of contact element 200 forms an undercut which creates a permanent and electrically conductive connection between the first and the second metal material. With PIN 12 at contact element 200, an electrically conductive connection can then be established between busbar 100 and a further contact element (not shown in Figure 4).

### List of reference characters:

| **Reference character** | **Description** |
|---|---|
| 1, 10, 100 | busbar |
| 2, 20, 200 | contact element |
| 3, 30, 300 | tool |
| 4, 40, 400 | projection |
| 5, 50, 500 | recess |
| 6 | threaded bushing |
| 7, 70, 700 | connection assembly |
| 8, 80, 800 | inner surface of the hole in the busbar |
| 9 | connecting element |
| 11 | stop element |
| 12 | PIN |
| 13 | screw head |
| 14 | touch guard cap |
| 15 | internal thread |
| 16 | external thread |
| 17 | widening |
| 18 | touch guard cap |
| 19 | mating member (screw) |
| 21 | contact ring |
| 22 | opening |

## Claims

1. Connection assembly, comprising:
a busbar (1) made of a first metallic material, wherein said busbar (1) comprises a hole;
a contact element (2) which is arranged in said hole in said busbar (1) and is made of a second metallic material;
wherein the outer diameter of the part of said contact element (2), which in the direction of insertion is at the rear, is larger than the outer diameter of the part of said contact element (2) which in the direction of insertion is at the fore;
wherein the inner surface of said hole in said busbar (1) comprises a recess (5) which is filled with the material of said contact element (2), such that said contact element (2) is held in said hole of said busbar (1).

2. Connection assembly according to claim 1,
wherein the first metallic material comprises aluminum.

3. Connection assembly according to one of the preceding claims,
wherein the second metallic material comprises copper.

4. Connection assembly according to one of the preceding claims,
wherein said contact element (2) is tubular.

5. Connection assembly according to one of the preceding claims,
wherein said contact element (2) comprises a ring pin.

6. Connection assembly according to one of the preceding claims,
wherein the parts of said connection assembly are silver-plated at least in part.

7. Method for producing a connection assembly according to one of the claims 1 to 6, wherein the method comprises the following steps of:
producing a hole in said busbar (1);
producing a contact element that can be inserted into said hole in said busbar (1), wherein the outer diameter of the part of said contact element (2), which in the direction of insertion is at the rear, is larger than the outer diameter of the part of said contact element (2) which in the direction of insertion is at the fore;
inserting said contact element (2) into said busbar (1);
inserting into said contact element (2) a removable tool comprising a projection (4) on its outer surface, wherein said projection (4) presses the wall of said contact element (2) against the inner surface of said hole in said bus bar (1) so that the wall of said contact element (2) is deformed in a radial direction towards the inner surface of said hole in said bus bar (1), whereby a recess is formed in the inner surface of said hole in said busbar (1) and is filled with the material of said contact element (2) which is pressed against the inner surface of said hole in said busbar (1).

8. Method according to claim 7, wherein the production of said hole in said busbar (1) is effected by punching.

9. Method according to claim 7,
wherein the production said hole in said busbar (1) is effected by drilling.

10. Method according to one of the claims 7 to 9,
wherein said hole in said busbar (1) is cylindrical.

11. Method according to claim 10,
wherein said cylindrical hole in said busbar (1) is straight.

12. Method according to one of the claims 7 to 10,
wherein said contact element (2) is tubular.

13. Method according to one of the claims 7 to 11,
wherein the production of said contact element (2) is effected by cold forming.
